(19) Europäisches Patentamt
European Patent Office
Office européen des brevets

(11) Veröffentlichungsnummer: **0 105 529**
**A1**

(12) # EUROPÄISCHE PATENTANMELDUNG

(21) Anmeldenummer: 83109997.3

(22) Anmeldetag: 06.10.83

(51) Int. Cl.³: C 08 F 226/02
C 08 F 220/18, C 10 G 1/00
//(C08F226/02, 220/18), (C08F220/18, 226/02)

(30) Priorität: 08.10.82 DE 3237308

(43) Veröffentlichungstag der Anmeldung: 18.04.84 Patentblatt 84/16

(84) Benannte Vertragsstaaten: CH DE FR GB LI NL

(71) Anmelder: CASSELLA Aktiengesellschaft
Hanauer Landstrasse 526
D-6000 Frankfurt am Main 61(DE)

(72) Erfinder: Engelhardt, Friedrich, Dr.
Hünfelder Strasse 20
D-6000 Frankfurt/Main 61(DE)

(72) Erfinder: Riegel, Ulrich
Steinäckerstrasse 6
D-6000 Frankfurt/Main 61(DE)

(72) Erfinder: Bicker, Richard, Dr.
Brunnenstrasse 40
D-6237 Liederbach(DE)

(72) Erfinder: Heier, Karl Heinz, Dr.
Mailänder Strasse 19
D-6000 Frankfurt/Main 70(DE)

(72) Erfinder: Böhm, Roland
Fischbacher Strasse 29
D-6233 Kelkheim(DE)

(74) Vertreter: Urbach, Hans-Georg, Dr. et al,
Hanauer Landstrasse 526
D-6000 Frankfurt am Main 61(DE)

(54) **Neue Copolymerisate, Verfahren zu ihrer Herstellung und ihre Verwendung.**

(57) Neue Copolymerisate, die in statistischer Verteilung zu 2 - 50 Gew.% aus Resten der Formel I

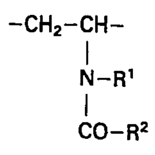
(I)

38 - 98 Gew.% aus Resten der Formel II

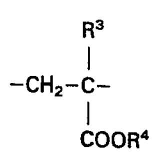
(II)

und zu 0 - 60 Gew.% aus Resten, die sich von anderen copolymerisierbaren olefinisch ungesättigten Monomeren ableiten,
bestehen, wobei

$R^1$ Wasserstoff, Hydroxymethyl, oder Alkyl mit 1 bis 36 C-Atomen,
$R^2$ Wasserstoff, Alkyl oder Alkenyl mit 1 bis 36 C-Atomen oder Phenyl, $R^3$ Wasserstoff oder Methyl,
$R^4$ Alkyl mit 1 bis 36 C-Atomen bedeuten mit der Maßgabe, daß mindestens einer der Reste $R^1$, $R^2$ oder $R^4$ ein Alkylrest mit 10 bis 36 C-Atomen ist, ihre Herstellung und ihre Verwendung.

EP 0 105 529 A1

Croydon Printing Company Ltd.

Neue Copolymerisate Verfahren zu ihrer Herstellung und ihre Verwendung

Die vorliegende Erfindung betrifft neue Copolymerisate, die in statistischer Verteilung zu
2 - 50 Gew.% aus Resten der Formel I

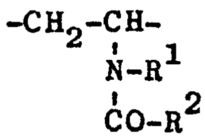

(I)

38 - 98 Gew.% aus Resten der Formel II

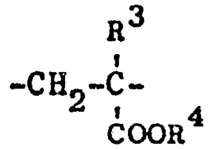

(II)

und zu 0 - 60 Gew.% aus Resten, die sich von anderen copolymerisierbaren olefinisch ungesättigten Monomeren ableiten,
bestehen, wobei
$R^1$ Wasserstoff, Hydroxymethyl, oder Alkyl mit 1 bis 36 C-Atomen,
$R^2$ Wasserstoff, Alkyl oder Alkenyl mit 1 bis 36 C-Atomen oder Phenyl, $R^3$ Wasserstoff oder Methyl,
$R^4$ Alkyl mit 1 bis 36 C-Atomen bedeuten
mit der Maßgabe, daß mindestens einer der Reste $R^1$, $R^2$ oder $R^4$ ein Alkylrest mit 10 bis 36 C-Atomen ist.

Die erfindungsgemäßen Copolymerisate dienen als Hilfsmittel bei der Gewinnung und Verarbeitung von Erdöl und Erdölfolgeprodukten und sind in ihrer Wirkung bekannten, für die gleichen Zwecke eingesetzten Hilfsmitteln erheblich überlegen.

Copolymersierbare, olefinisch ungesättigte Monomere, von denen sich bis zu 60 Gew.% der in den erfindungsgemäßen Copolymerisaten enthaltenen Reste ableiten können, enthalten vorzugsweise eine einzige olefinische Doppelbindung. Sie sind somit als Derivate des Ethylens zu betrachten. Sofern der Anteil dieser Monomeren nicht über 20 Gew.% liegt, können sie auch zwei olefinische Doppelbindungen enthalten, insbesondere zwei konjugierte Doppelbindungen. Solche Monomeren sind das Butadien und seine Derivate, wie z.B. das Isopren.

Besonders hervorgehoben seien erfindungsgemäße Copolymere, die neben den Resten der Formeln I und II 0 bis 60 Gew.% von Resten der Formel III

$$-CH_{2-n}R^3_n\ -\underset{\displaystyle X}{CH_{1-m}}R^3_m- \qquad \text{(III) enthalten}$$

worin n und m jeweils die Werte 0 oder 1 haben können und die Summe n + m ebenfalls 0 oder 1 ist, $R^3$ die obengenannte Bedeutung hat und X Amidocarbonyl, Cyan, Carboxyl oder dessen Alkali- oder Ammoniumsalz; Alkoxycarbonyl mit 1 bis 6, vorzugsweise 1 bis 3, Kohlenstoffatomen; Hydroxy-Alkoxycarbonyl mit 1 bis 3 Kohlenstoffatomen; N-Methylolamidocarbonyl der Formel $HOCH_2NH-CO-$, dessen Methylolgruppe gegebenenfalls mit Alkanolen von 1 bis 4 Kohlenstoffatomen veräthert ist; Pyrrolidonyl-(1); gegebenenfalls substituiertes Phenyl oder Benzyl; Pyridinium; die Sulfonsäuregruppe; Sulfoalkylamidocarbonyl mit 1 bis 4 Kohlenstoffatomen; die Phosphonsäuregruppe, wobei die Sulfonsäure- und Phosphonsäuregruppen auch in Form ihrer Alkali- oder Ammoniumsalze vorliegen können; einen Rest der Formel IV

$$-COOCH_2CH_2-O-\overset{\displaystyle O}{\overset{\|}{\underset{\underset{\displaystyle R^6}{|}}{P}}}-R^5 \qquad \text{(IV)}$$

worin $R^5$ und $R^6$ gleich oder verschieden sind und für Alkyl mit 1 bis 7, vorzugsweise 1 oder 2, Kohlenstoffatomen stehen; einen Rest der Formel V

$$-COO-C_pH_{2p}-N\begin{matrix} \diagup R^5 \\ \diagdown R^6 \end{matrix} \qquad \text{(V)}$$

worin $R^5$ und $R^6$ die oben angebenen Bedeutungen haben und p für eine Zahl von 1 bis 4 steht; oder einen Rest der Formel VI

$$-CONH-C_pH_{2p}-N\begin{matrix} \diagup R^7 \\ \diagdown R^8 \end{matrix} \qquad \text{(VI)}$$

worin $R^7$ und $R^8$ gleich oder verschieden sind und für Alkyl mit 1 bis 4, vorzugsweise 1 oder 2 Kohlenstoffatomen stehen und p für eine Zahl von 1 bis 4 steht; sowie die den Formeln V und VI entsprechenden, beispielsweise durch Dimethylsulfat oder Methylchlorid quaternisierten Gruppen bedeutet.

Die erfindungsgemäßen Copolymerisate sind statistisch, d.h. daß die Verteilung der Einheiten I bis III in dem Makromolekül statistisch ist.

Selbstverständlich können die erfindungsgemäßen Copolymerisate mehrere verschiedene Einheiten der Formeln I, II und III enthalten, z.B. verschiedene Einheiten der Formel I, die sich durch unterschiedliche Bedeutung der Reste $R^1$ und/oder $R^2$ voneinander unterscheiden. In der Regel haben in einem einzelnen Makromolekül die Reste $R^1$ bis $R^4$ und X nicht mehr als je 3, vorzugsweise nicht mehr als zwei, verschiedene Bedeutungen. In der Regel haben die Copolymerisate dieser Erfindung K-Werte (vgl. Fikentscher, "Cellulosechemie" Bd 13, S. 58 (1932)) von 5 bis 100, vorzugsweise von 7 bis 70.

Die für $R^1$, $R^2$ und $R^4$ bis $R^8$ stehenden Alkylreste sind geradkettig oder verzweigt und können über ein primäres, secundäres oder tertiäres C-Atom gebunden sein. Bevorzugt sind primäre Alkylreste und insbesondere geradkettige primäre Alkylreste.

Von den für $R^2$ stehenden Alkenylresten, die ebenfalls geradkettig oder verzweigt sein können, sind solche mit 10 bis 36 C Atomen, insbesondere 10 bis 20 C-Atomen bevorzugt. Besonders bevorzugt sind natürlich vorkommende Alkyl- und Alkenylreste.

$R^1$ und $R^4$ können auch für Mischungen von langkettigen Alkylresten und $R^2$ für Mischungen von langkettigen Alkyl- und Alkenylresten stehen, in denen die einzelnen Komponenten in einem in natürlichen Ölen und Fetten vorkommenden

Verhältnis vorliegen. Solche Mischalkyl- und-alkenylreste werden dann mit dem Namen der natürlichen Quelle bezeichnet, wie z.B. Talgfettalkyl, Cocosfettalkyl oder der 17 C-Atome aufweisende Alkenylrest der Ölsäure.

Ein für X stehender Phenylkern und der Phenylkern eines für X stehenden Benzylkerns sind entweder unsubstituiert, oder sie tragen 1 oder 2 Substituenten.

Geeignete, gängige Substituenten sind Halogen und Alkyl mit 1 bis 4 C-Atomen, insbesondere Chlor, Methyl und Ethyl. Einfachsubstitution kann in o- , m- oder p-Stellung zur Vinyl- oder Allylgruppe vorliegen, Zweifachsubstitution, vorzugsweise in 2,4-oder 2,6-Stellung aber auch in 2,5-, 3,5- oder 3,4-Stellung.

Bevorzugt sind, sofern X Phenyl oder Benzyl bedeutet, die im aromatischen Kern nur einfach substituierten und besonders bevorzugt die unsubstituierten Reste.

Weitere Substituenten, die ein für X stehender Phenyl- oder Benzylrest tragen kann,sind Alkoxy mit 1 oder 2 C-Atomen, Fluor, Trifluormethyl oder Nitro .

Bevorzugte erfindungsgemäße Copolymerisate bestehen in statistischer Verteilung aus 2 - 25 Gew.%, insbesondere 5 bis 20 Gew.%, Resten der Formel I, 75 - 98 Gew.%, insbesondere 80 - 95 Gew.%, Resten der Formel II und 0 - 23 Gew.%, insbesondere 0 - 5 Gew.%, Resten der Formel III.

Bevorzugt, insbesondere für den Einsatz als Hilfsmittel zur Verbesserung des Fließverhaltens von Rohölen sind solche erfindungsgemäßen Produkte, die keine Reste der Formel III enthalten.

Bevorzugt sind auch solche erfindungsgemäßen Copolymerisate, in denen
$R^1$ Wasserstoff oder Alkyl mit 1 bis 6, insbesondere 1 oder 2 C-Atomen bedeutet

ferner solche, in denen $R^2$ Alkyl mit 1 bis 36, insbesondere 1 bis 20, C-Atomen bedeutet und ferner solche, in denen $R^4$ Alkyl mit 10 bis 36, insbesondere 10 bis 20, C-Atomen bedeutet.

Von den erfindungsgemäßen Copolymerisaten, die einen Rest der Formel III enthalten, sind solche bevorzugt, in denen dieser Rest der Formel VII

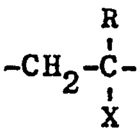

(VII)

entspricht.

Weiterhin sind solche erfindungsgemäßen Copolymerisate mit einem Anteil von Resten der Formel III bevorzugt, in denen X Amidocarbonyl, Cyan, Carboxyl, bzw. dessen Salze, Alkoxycarbonyl, gegebenenfalls substituiertes Phenyl, die Phosphonsäureestergruppe, die Phosphonsäure- und die Sulfonsäuregruppe bzw. deren Salze bedeutet.

Die erfindungsgemäßen Copolymerisate werden hergestellt durch Copolymerisation von 2 bis 50 Gew.% eines gegebenenfalls N-substituierten N-Vinylcarbonsäureamids der Formel Ia

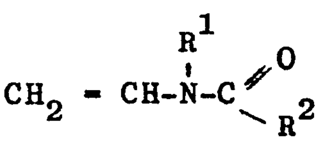

(Ia)

38 bis 98 Gew.% eines Acrylsäure oder Methacrylsäureesters der Formel IIa

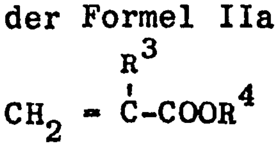

(IIa) und gegebenenfalls

0 bis 60 Gew.% eines olefinisch ungesättigten Monomers wie z.B. eines Derivats des Ethylens, Butadien, eines Butadien-Derivats, wie Isopren, insbesondere aber eines Monomers der Formel IIIa

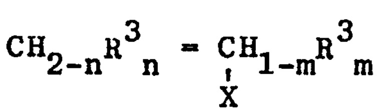

(IIIa)

und vorzugsweise eines solchen der Formel VIIa

$$CH_2 = \underset{X}{\underset{|}{C}}R^3 \qquad \text{(VIIa)}$$

wobei die Reste $R^1$ bis $R^4$ und X die oben genannten Bedeutungen haben.

Vorzugsweise werden 2 bis 25, insbesondere 5 bis 20, Gew.% des Vinylcarbonamids der Formel (Ia), 75 bis 98, insbesondere 80 - 95, Gew.% des Esters der Formel IIa und 10 bis 23 , insbesondere 0 bis 5, Gew.% eines sonstigen copolymerisierbaren Monomers, insbesondere eines solchen der Formel IIIa oder vorzugsweise VIIa copolymerisiert.

Sollen Copolymere hergestellt werden, die mehrere verschiedene Reste $R^1$ bis $R^4$ und X aufweisen, so werden zur Copolymerisation mehrere verschiedene, in der Regel 3, oder vorzugsweise 2, verschiedene Comonomere der Formeln Ia bis VIIa eingesetzt.

Sind bei der Copolymerisation Monomere mit sauren Gruppen anwesend, so werden zweckmäßigerweise deren Salze mit Ammoniak oder organischen Aminen eingesetzt.

Die Polymerisationsreaktion kann initiiert werden durch energiereiche elektromagnetische oder korpuskulare Strahlung oder durch Substanzen, die Radikale bilden. Dementsprechend sind als Polymerisationsinitiatoren geeignet organische Per-Verbindungen, wie z.B. Benzoylperoxid, Alkylhydroperoxid, wie z.B. Butylhydroperoxid, Cumolhydroperoxid, p-Menthanhydroperoxid, Dialkylperoxide, wie z.B. Di- tert.-Butylperoxid, ferner Azoverbindungen, wie z.B. Azo-bis-isobutyronitril, 2,2'-Azo-bis-(2-amidinopropan)-hydrochlorid oder Azo-bis-isobutyramid. Es ist vorteilhaft,

die Per-Verbindung in Kombination mit reduzierenden Substanzen einzusetzen.

Vorzugsweise verwendet man als Initiatoren solche, die in den bei der bevorzugten Ausführungsform der Copolymerisation eingesetzten organischen Lösungsmitteln löslich sind wie z.B. Benzoylperoxid, tert.- Butylperoxid, tert.-Buthylhydroperoxid, Cumolhydroperoxid.

Es ist weiterhin bekannt, den Polymerisationsansätzen kleine Mengen von sogenannten Moderatoren zuzusetzen, die den Verlauf der Reaktion dadurch harmonisieren, daß sie das Reaktionsgeschwindigkeits-Zeitdiagramm abflachen. Sie führen damit zu einer Verbesserung der Reproduzierbarkeit

der Reaktion und ermöglichen damit, einheitliche Produkte mit äußerst geringen Qualitätsabweichungen herzustellen. Beispiele für geeignete Moderatoren dieses Typs sind Nitrilo-tris-propionylamid oder Monoalkylamine, Dialkylamine oder Trialkylamine, wie z.B. Dibutylamin . Auch bei der Herstellung der erfindungsgemäßen Copolymerisate können solche Moderatoren mit Vorteil verwendet werden.

Weiterhin können den Polymerisationsansätzen sogenannte Regulatoren zugesetzt werden; das sind solche Verbindungen die das Molekulargewicht der hergestellten Polymerisate beeinflussen. Brauchbare bekannte Regulatoren sind z.B. Alkohole, wie Methanol, Ethanol, Propanol, Isopropanol, n-Butanol, sec.-Butanol und Amylalkohole, Alkylmercaptane, wie z.B. Dodecylmercaptan und tert.-Dodecylmercaptan, Isooctylthioglycolat und einige Halogenverbindungen, wie z.B. Tetrachlorkohlenstoff,Chloroform und Methylenchlorid.

Üblicherweise wird die Polymerisation in einer Schutzgasatmosphäre ausgeführt, vorzugsweise unter Stickstoff.

Die Polymerisationsreaktion kann in Lösung, oder unter den Bedingungen der Fällungspolymerisation bei Temperaturen von 20 bis 120°C, vorzugsweise von 40 bis 100°C, ausgeführt werden. Wenn als Lösungsmittel für die Polymerisationsreaktion ein organisches Lösungsmittel eingesetzt wird in dem auch das Polymerisat löslich ist, so verläuft die Reaktion in Lösung, und eine viskose Lösung des Copolymerisats wird erhalten.

Das Reaktionsprodukt kann isoliert werden, entweder durch Abdestillieren des organischen Lösungsmittels aus der Lösung, oder durch Vermischen der Lösung mit einem anderen organischen Lösungsmittel, das mit dem ersten Lösungsmittel vollständig mischbar ist, in dem aber das Copolymerisat unlöslich ist. Bei der Zugabe solcher organischen Lösungsmittel zu der Polymerlösung fällt das entstandene Polymerisat bzw. Copolymerisat aus und kann von der flüssigen Phase, z.B. durch Filtration abgetrennt werden. Vorzugsweise wird jedoch die erhaltene Lösung des Polymerisats bzw. Copolymerisats direkt für den weiteren Gebrauch eingesetzt, gegebenenfalls nach Einstellung auf eine bestimmte gewünschte Konzentration.

Aufgrund der hier gegebenen Möglichkeit, die erhaltene Copolymerisatlösung ohne weitere Aufarbeitung für den geplanten Gebrauch einzusetzen, ist die Ausführung der Copolymerisation nach diesen Verfahren der Lösungspolymerisation bevorzugt. Organische Lösungsmittel, die für dieses Verfahren geeignet sind, sind vor allem aromatische flüssige Kohlenwasserstoffe wie Benzol, Toluol, o-, m-, and p-Xylol sowie dessen technische Isomerengemische, Halogenbenzole wie Mono- und Dichlorbenzol, Ethylbenzol oder Cymol und Gemische dieser Aromaten untereinander oder mit aliphatischen Kohlenwasserstoffen, wie sie vorwiegend bei der Erdölaufbereitung anfallen, wie z.B. Benzin, Petroleum, Schweröl.

Wenn die Copolymerisation in einem organischen Lösungsmittel, in dem die Polymerisate unlöslich sind, durchgeführt wird, so verläuft sie unter den Bedingungen der Fällungspolymerisation. In diesem Fall fällt das entstandene Polymerisat bzw. Copolymerisat im Verlauf der Reaktion in fester Form aus und kann leicht in üblicher Weise, wie z.B. durch Absaugen und anschließendes Trocknen, isoliert werden. Selbstverständlich es ist auch möglich und in manchen Fällen bevorzugt, das Lösungsmittel aus dem Reaktionsansatz heraus zu destillieren.

Von den radikalbildenden Mitteln liefern diejenigen, die in der zusammenhängenden Phase löslich sind, Copolymerisate mit speziellen Eigenschaften, insbesondere mit hohen mittleren Molekulargewichten.

Die Temperatur, bei der die Copolymerisation durchgeführt wird, kann, wie bekannt, innerhalb weiter Grenzen variiert werden. In der Regel wird bei Temperaturen zwischen 20 und 200°C, erforderlichen falls unter Druck, gearbeitet.

Vorzugsweise polymerisiert man bei einer Temperatur unterhalb des Siedepunktes des eingesetzten Lösungsmittels oder des Dispergiermittels (d.h. der zusammenhängenden Phase) ohne Druck. Bei der Herstellung der erfindungsgemäßen Copolymerisate durch Lösungspolymerisation wird vorzugsweise im Temperaturbereich von 80 bis 180°C gearbeitet.

Die erfindungsgemäßen Copolymerisate dienen als wertvolle Hilfsmittel bei der Gewinnung und Verarbeitung von Rohölen. So verbessert ihr Zusatz zu den z.T. sehr zähflüssige Rohölen deren Fließeigenschaften sehr erheblich so daß sie leichter handhabbar werden und beispielsweise mit erheblich geringerem Energieaufwand durch Leitungen gepumpt werden können bzw. bei gleicher Pumpenleistung die Fördermenge erheblich ansteigt. Diese Wirkung beruht im wesentlichen auf einer drastischen Herabsetzung der Viskosität und auf einer erhebliche Erniedrigung des Stockpunktsder Rohöle. Der Zusatz dieser Substanzen kann auch eine Paraffinauscheidung aus flüssigen, höher siedenden Erdölfraktionen und z.B. Dieselkraftstoff verhindern. Sie sind daher als Paraffininhibitoren sehr wertvoll um Verstopfungen von Sonden und Leitungen in Apparaturen und Motoren zu vermeiden.

Es ist bereits bekannt, das Fließverhalten von Rohölen durch Zusatz von Polymerisaten wie z.B. Ethylen/Vinylacetat Copolymere, Polyacrylsäureester, Polyisobutylen zu verbessern.

Diese bekannten Polymerisate und Copolymerisate müssen jedoch in relativ hoher Dosierung eingesetzt werden, um den gewünschten Effekt zu erzielen. Die erfindungsgemäßen Copolymerisate haben im Vergleich mit den bekannten Zusätzen eine erheblich gesteigerte Wirksamkeit sowohl in Bezug auf die Herabsetzung der Viskosität wie auch des Stockpunkts von Rohölen. Meist ist sogar eine erhebliche Verbesserung beider Effekte vorhanden.

Die Wirksamkeitsprüfung der erfindungsgemäßen Substanzen ist im Anschluß an die Herstellungsbeispiele genau beschrieben worden. Sie erfolgte im Vergleich zu einem bekannten Copolymerisat, das den nächstvergleichbaren Stand der Technik repräsentiert.

Die zur Herstellung der erfindungsgemäßen Copolymerisate eingesetzten Comonomeren der Formel Ia

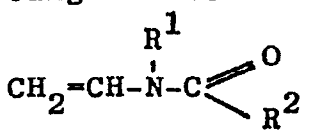

(Ia)

worin $R^2$ Alkyl oder Alkenyl mit 6 bis 17 C-Atomen und $R^1$ Alkyl mit 1 bis 4 C-Atomen bedeuten, sind neu. Sie werden hergestellt analog dem in der DE-OS 30 30 544 beschriebenen Verfahren durch eine Dehydrohalogenierung von N-(β-Halogenethyl)-carbonsäureamiden unter dem Einfluß von Basen in einem aprotischen unpolaren organischen Lösungsmittel und in Gegenwart eines Phasentransferkatalysators.

Die Darstellung der N-(β-Halogenethyl)-carbonsäureamide erfolgt nach bekannten Methoden, z.B. nach dem in Zh. Obsh. Khim. 33, 391 (1963) beschriebenen Zweistufenverfahren, welches sich durch folgendes Formelschema wiedergeben läßt:

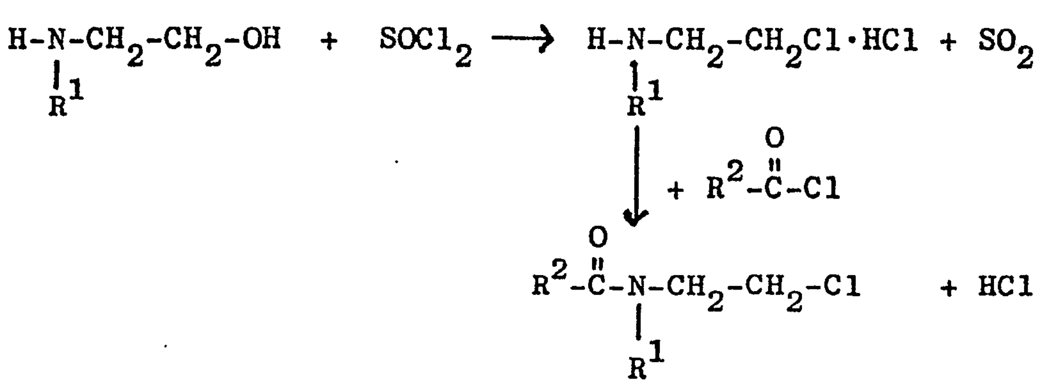

Unter den für das Verfahren zur Herstellung der N-Vinylcarbonsäureamide in Frage kommenden Basen werden sowohl praktisch alle Alkali- als auch Erdalkalihydroxide verstanden sowie die Alkoholate. Bevorzugt ist jedoch die Verwendung von NaOH und von KOH, insbesondere von KOH und K-tert.-Butylat.

Diese Hydroxide werden zweckmäßig in möglichst feinteiliger Form angewandt, und zwar vorteilhaft in stöchiometrischer Menge.

Als aprotische unpolare organische Lösungsmittel kommen im Prinzip alle inerten organischen Lösungsmittel dieser Charakteristik in Frage; bevorzugt sind jedoch aliphatische und aromatische Kohlenwasserstoffe mit bis zu etwa 10 C-Atomen (Petroläther, Cyclohexan, Benzol, Toluol, Xylole etc.).

Als Phasentransferkatalysatoren können im Prinzip alle für derartige Zwecke geeigneten Verbindungen verwendet werden. Bevorzugt sind quartiäre Ammonium- und Phosphoniumsalze (insbesondere die Halogenide), welche sowohl allein als auch in Mischung miteinander angewandt werden können, sowie die Kronenäther.

In beispielhafter Weise werden folgende Verbindungen genannt:
Hexadecyltrimethylethylammoniumbromid,
Tricaprylmethylammoniumchlorid,
Tetrabutylammoniumbromid,
Ethyltrioctylphosphoniumbromid, 18-Krone-6 etc.

Die Menge des eingesetzten Phasentransferkatalysators beträgt zweckmäßig zwischen etwa 0,5 und 10 Mol-%, vorzugsweise zwischen etwa 1 und 5 Mol-%, bezogen auf das Ausgangs-N-(ß-halogenethyl)-carbonsäureamid.

Die Reaktionstemperatur kann in relativ weiten Grenzen (im allgemeinen zwischen etwa 0 und 150°C) gewählt werden; bevorzugt sind Temperaturen zwischen etwa 10 und 100°C,

insbesondere zwischen etwa 20 und 60°C. Mit ganz besonderem Vorteil wird das Verfahren bei Raumtemperatur durchgeführt. Die Reaktionszeit beträgt bis zum vollständigen Umsatz im allgemeinen zwischen etwa 1 und 5 Stunden.

Bei der Durchführung des Verfahrens wird die Ausgangsmischung aus dem entsprechenden N-(β- alogenethyl)-carbonsäureamid, der Base, dem aprotischen unpolaren organischen Lösungsmittel und dem Phasentransferkatalysator im entsprechenden Mengenverhältnis zweckmäßig heftig gerührt. Das bei der Reaktion gebildete Wasser kann gegebenenfalls auf bekannte Weise mittels eines Wasserabscheiders ausgekreist werden. Die Aufarbeitung des Reaktionsansatzes erfolgt auf an sich bekannte Weise.

Die folgenden Ausführungsbeispiele veranschaulichen die Herstellung und die anwendungstechnische Prüfung der erfindungsgemäßen Copolymerisate.

Beispiel 1

In einem 250 ml Polymerisationskolben mit Rührer, Rückflußkühler, Thermometer, Gaseinleitungsrohr und Heizung werden 45 ml Toluol vorgelegt und darin 45 g Acrylsäurestearylester unter Einleiten eines schwachen Stickstoffstromes gelöst, und danach werden 5 g N-Vinyl-N-methyllaurylamid zugegeben. Das Reaktionsgemisch wird auf 100°C erwärmt, und bei dieser Temperatur werden 0,3 g Benzoylperoxyd zugesetzt. Die Polymerisation setzt unter Temperaturerhöhung ein und erreicht ein Temperaturmaximum von 125°C. Nach Abklingen der Reaktion werden noch 0,3 g tert.- Butylhydroperoxyd zugesetzt und die Badtemperatur auf 150°C eingestellt. Nach 2 Stunden wird das Bad entleert und unter Rühren abkühlen gelassen. Man erhält eine gelbliche viskose Lösung mit einem K-Wert von 25 (nach Fikentscher).

Die Lösung ist ohne weitere Aufarbeitung für die Verbesserung des Fließverhaltens von Rohöl geeignet.

Ein Zusatz des erhaltenen Copolymerisats von 500 ppm, berechnet auf Wirksubstanz, zu einem Nordsee-Rohöl erniedrigt dessen Stockpunkt von - $1^{o}C$ auf $-28^{o}C$.

Die Viskosität eines Nordsee-Rohöls bei $5^{o}C$ wird durch einen Zusatz von 500 ppm, berechnet auf Wirksubstanz, des erhaltenen Copolymerisats bei einem Schergefälle von $127 [sec^{-1}]$ von 90 auf 30 mPa.s und einem Schergefälle von $14 [sec^{-1}]$ von $>$ 300 auf 40 mPa.s herabgesetzt.

Will man das erhaltene Copolymerisat isolieren, so wird die Toluol-Lösung am Rotationsverdampfer bei $70^{o}C$ vollständig abgezogen.

Das in obigem Beispiel eingesetzte N-Vinyl-N-methyl-laurylamid wurde auf folgendem Weg erhalten:

a)

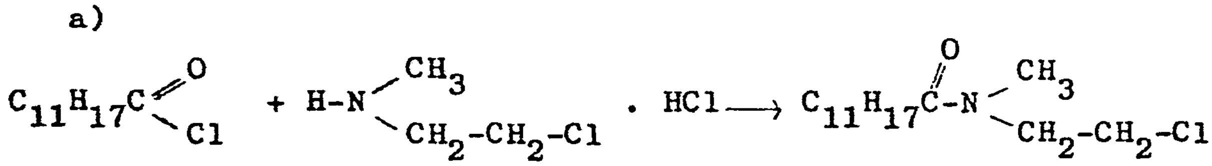

129.9 g (1.0 Mol) des Hydrochlorids von N-Methyl-N-(ß-Chlorethyl)amin werden in 300 ml Toluol gegeben und bei $110^{o}C$ 1 mol 218.77 g Laurylsäurechlorid zugetropft bis zur beendeten HCl-Entwicklung. Die Reaktionsmischung wird weitere 2h bei 120 - $130^{o}C$ gerührt und noch solange Säurechlorid zugetropft, bis keine HCl-Entwicklung mehr stattfindet. Das Toluol wird scharf abgezogen am Rotationsverdampfer, der Rückstand enthält die rohe ß-Chlorverbindung (90 - 98%ig), die zur HCl-Eliminierung direkt eingesetzt werden kann.

Durch Säulenchromatographie kann die β-Chlorverbindung noch weiter gereinigt werden.

b) 21,8 g = 0,08 mol rohes N-Methyl-N-ß-chlorethyllaurinsäureamid werden in 300 ml Petroläther 60/90 gelöst und mit 5,0 g Tetrabutylammoniumbromid, 6,88 g KOH-Pulver und 100 mg Hydrochinon versetzt und 2h bei Rückflußtemperatur gerührt.

Nach üblicher Aufarbeitung erhält man das gewünschte N-Vinyl-N-methyl-laurylamid in einer Ausbeute von 70 % d.Th.

Beispiel 2

In einem 500 ml-Emulgierkolben, ausgerüstet mit Rührer und Bodenauslauf werden 148 g Toluol vorgelegt und unter Rühren 152 g Stearylacrylat darin gelöst. Nach Zugabe von 9 g Stearylamin werden 11,8 g N-Vinyl-N-methylacetamid, 5,0 g p-Methylstyrol, 1,7 g Benzoylperoxid-Pulver und 1,7g tert.-Buthylhydroperoxid 80%ig hinzugefügt und zu einer homogenen Lösung verrührt, wobei es von Vorteil ist, die Temperatur dieser Lösung nicht wesentlich unter 30°C abfallen zu lassen, da sonst eine Trübung und Ausscheidung durch Stearylacrylat erfolgen kann.

Von dieser homogenen Lösung werden nun 80 ml durch den Bodenauslauf in einem Polymerisationskolben einlaufen gelassen, der ausgestattet ist mit Rührer, Rückflußkühler, Thermometer, Gaseinleitungsrohr und Zulaufstutzen für die Monomerenlösung. Mittels eines elekrisch beheizten Ölbades wird die vorgelegte Lösung auf 115 - 125°C (130° Badtemp.) angeheizt und durch das Gaseinleitungsrohr ein schwacher $N_2$-Strom eingeleitet. Ist die Innentemp. von 120° erreicht, wird der Rest der Monomerenlösung aus dem Emulgierkolben durch den Bodenauslauf langsam in das Polymerisationsgefäß eingetropft, in ca. 80 Min. in die gesamte Monomerenlösung zudosiert, wobei die Temperatur im Reaktionskolben zwischen 115 und 120° schwankt. Anschließend wird 3 Std. bei 140° Badtemp. nachgerührt (120 - 122°C Innentemp).

Man erhält eine dunkelbraune, klare, viskose Lösung mit einem K-Wert von 13 (nach Fikentscher).

<u>Beispiel 3</u>

In einem 250 ml Polymerisationskolben, ausgerüstet mit Rührer, Rückflußkühler, Thermometer, Gaseinleitungsrohr und elektrisch beheiztem Ölbad werden 90 g tert.-Butanol vorgelegt und unter Rühren 90 g Stearylacrylat, 2 g Vinylphosphonsäure, 8 g Stearylamin und 5 g N-Vinyl-N-methylstearylamid darin gelöst.

Unter Einleitung eines schwachen $N_2$-Stromes in die Reaktionslösung wird auf 55°C aufgeheizt. Dann erfolgt die Zugabe von 0,5 g Azoisobutyronitril, worauf unverzüglich die Polymerisationsreaktion einsetzt und die Temperatur im Verlaufe von ca. 15 Min. bis auf 63° anstiegt. Anschließend wird die Temperatur auf 80 - 85°C gesteigert und 1 Std. bei dieser Temperatur nachgerührt. Um das Produkt in eine für den Einsatz als Fließverbesserer für Rohöl geeignete Gebrauchslösung zu überführen, wird anschließend das tert.-Butanol abdestilliert und durch Toluol ersetzt. Man erhält eine bei Raumtemperatur sirupartige trübe, gelbliche Lösung mit einem K-Wert von 25,2 (nach Fikentscher).

In analoger Weise lassen sich die erfindungsgemäßen Copolymerisate der in der folgenden Tabelle angegebenen Zusammensetzung herstellen.

Die den in den Ausführungs- und Tabellenbeispielen angegebenen K-Werten zugrundeliegenden relativen Viskositäten wurden wie üblich bei einer Polymerisatkonzentration von 0,5 g/100 ml in Toluol als Lösungsmittel bestimmt.

In der Tabellenspalte $R^2$ findet sich unter den Bezeichnungen "Chloröl" eine Reihe von Mischalkylresten und Mischalkenyl-Resten, die natürlichen Quellen entstammen. Es bedeuten

Chloröl-K Alkylreste entsprechend einer natürlichen Palmitinfettsäure

| | |
|---|---|
| Chloröl-TE | Alkylreste und Alkenylreste einer pflanzlichen Mischölfettsäure, vorwiegend Ölsäure |
| Chloröl-TR | Alkyl- und Alkenylreste einer Mischölfettsäure pflanzlichen Ursprungs |
| Chloröl-TSP | Mischung aus Chloröl TE und TR. |

## Tabelle I

| Tabellen Beispiel Nr. | K-Wert | Zusammensetzung in Gew.% | | $R_3$ | $R_4$ | $R_1$ | $R_2$ |
|---|---|---|---|---|---|---|---|
| | | 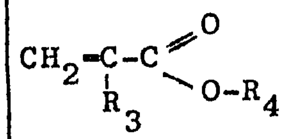 | 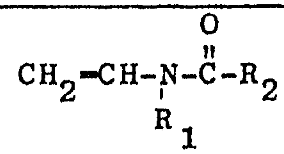 | | | | |
| 1 | 23,0 | 80 | 20 | " | Stearyl | " | " |
| 2 | 23,8 | 80 | 20 | " | Cetyl | " | " |
| 3 | 15,4 | 95 | 5 | " | Stearyl | " | " |
| 4 | 50,7 | 95 | 5 | " | " | " | " |
| 5 | 18,7 | 90 | 10 | " | " | " | " |
| 6 | 20,7 | 90 | 10 | " | " | " | " |
| 7 | 45,4 | 90 | 10 | " | " | " | " |
| 8 | 24,6 | 80 | 20 | " | " | " | " |
| 9 | 66,9 | 80 | 20 | " | " | " | " |
| 10 | 15,7 | 90 | 10 | " | " | " | Stearyl |
| 11 | 23,0 | 80 | 20 | " | Dodecyl | " | $-CH_3$ |
| 12 | 15,8 | 90 | 10 | " | Stearyl | " | Lauryl |
| 13 | 13,5 | 90 | 10 | " | Alfol 2022 | " | " |
| 14 | 24,6 | 90 | 10 | $-CH_3$ | " | " | $-CH_3$ |

Tabelle I

| Tabellen Beispiel Nr. | K-Wert | Zusammensetzung in Gew.% 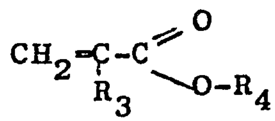 | 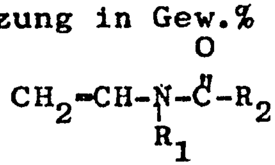 | $R_3$ | $R_4$ | $R_1$ | $R_2$ |
|---|---|---|---|---|---|---|---|
| 15 | 24,9 | 95 | 5 | " | Stearyl | " | " |
| 16 | 14,9 | 90 | 10 | -H | " | $CH_3$ | $CH_3(CH_2)_{10}$ |
| 17 | 14,8 | 95 | 5 | " | " | " | " |
| 18 | 12,7 | 90 | 10 | " | " | " | $CH_3(CH_2)_4$ |
| 19 | 15,9 | 95 | 5 | " | Alfol 2022 | " | $CH_3(CH_2)_{10}$ |
| 20 | 14,6 | 90 | 10 | " | " | " | " |
| 21 | 16,6 | 90 | 5 | " | " | " | " |
| | | | 5 | " | " | " | $-CH_3$ |
| 22 | 14,2 | 95 | 55 | " | " | " | $CH_3(CH_2)_4$ |
| 23 | 15,6 | 90 | 10 | " | " | " | " |
| 24 | 18,9 | 90 | 5 | " | " | " | " |
| | | | 5 | " | " | " | $-CH_3$ |
| 25 | 13,5 | 95 | 5 | " | " | " | " |
| 26 | 12,6 | 95 | 5 | " | " | " | " |

Tabelle I

| Tabellen Beispiel Nr. | K-Wert | Zusammensetzung in Gew.% $CH_2{=}C(R_3){-}C(=O){-}O{-}R_4$ | $CH_2{=}CH{-}N(R_1){-}C(=O){-}R_2$ | $R_3$ | $R_4$ | $R_1$ | $R_2$ |
|---|---|---|---|---|---|---|---|
| 27 | 7,2 | 95 | 5 | " | " | " | " |
| 28 | 43,7 | 95 | 5 | " | " | " | " |
| 29 | 15,4 | 95 | 5 | -H | Stearyl | $-CH_3$ | Octyl |
| 30 | 14,5 | 95 | 5 | " | " | " | Phenyl |
| 31 | 13,9 | 95 | 5 | " | " | " | Palmityl |
| 32 | 13,8 | 95 | 5 | " | " | " | Chloröl-K |
| 33 | 14,1 | 95 | 5 | " | " | " | Chloröl-TSP |
| 34 | 12,9 | 95 | 5 | " | " | " | Chloröl-TR |
| 35 | 13,6 | 95 | 5 | " | " | " | Chloröl-TE |
| 36 | 21,0 | 95 | 5 | $-CH_3$ | " | " | Stearyl |
| 37 | 17,6 | 95 | 5 | " | " | -H | $CH_3$ |
| 38 | 15,2 | 95 | 5 | -H | " | " | -H |
| 39 | 14,3 | 95 | 5 | " | " | $-CH_3$ | " |

Die folgenden Ausführungsbeispiele zeigen die anwendungstechnische Prüfung von erfindungsgemäßen Produkten.

Alle Prüfungen erfolgten im Vergleich zu einem Polymerisat des Standes der Technik, in den Tabellen als "STdT" bezeichnet, nämlich dem im Handel befindlichen Homopolymerisat aus Acrylsäure-$C_{18}$-Fettalkohol-Ester mit einem K-Wert von 21,5 (nach Fikentscher) sowie neben einer Nullprobe."

A.-Stockpunktserniedrigung diverser Rohöle

Jeweils 50 ml der entsprechenden Rohöle wurden auf 60°C erwärmt, in 150 ml Meßplattflaschen eingefüllt und jeweils 25 ml einer 50%igen Lösung der erfindungsgemäßen Copolymeren bzw. des dem Stand der Technik entsprechenden Vergleichsprodukts in Xylol bzw. Toluol (entsprechend 250 ppm Wirksubstanz) mit einer Präzisions-Spritze injiziert. Die verschlossenen Flaschen wurden anschließend 5 Minuten auf der Schüttelmaschine mit 150 Hub. pro Minute geschüttelt. Von den so vorbereiteten Proben wurden dann die Stockpunkte nach DIN 51597 (technisch äquivalent mit ASTM D 97-66) bestimmt. Die Meßwerte sind in Tabelle II den mit nicht additivierten Rohölproben gefundenen gegenübergestellt.

Die jeweiligen Nummern entsprechen den Nummern der Beispiele der Tabelle I.

B - Viskositätserniedrigung bei einem Nordsee-Rohöl

Wie in A beschrieben wurden jeweils 250 ppm Wirksubstanz der erfindungsgemäßen Copolymeren bzw. des Vergleichsprodukts des Stands der Technik in 50 ml des Nordseerohöls eingebracht und verteilt. Nach dem erneuten Erwärmen auf 60°C wurden die Proben in die temperierbare Meßeinrichtung des Rotationsviskosimeters (Typ Rotovisko der Firma Haake) eingefüllt und mit einer Rate von exakt 10° C/h auf die Meßtemperatur 5°C abgekühlt. Die Abhängigkeit der Viskosität vom Schergefälle ist in den folgenden Grafiken wiedergegeben. Die Grafiken (Fig. 1 bis Fig. 4) belegen eindeutig den überlegenen viskositätserniedrigenden Effekt der erfindungsgemäßen

Copolymeren. Die den Kurven zugeordneten Nummern entsprechen den Nummern der Beispiele der Tabelle I. Die mit 0 bezeichnete Kurve entspricht der Blindprobe; die Kurve "St. d. T." veranschaulicht die Wirkung des oben erwähnten handelsüblichen Acrylsäureester-Homopolymerisats.

## Tabelle II

Bestimmung der Stockpunkte nach DIN 51 597 bei zwei Rohölen nach Zusatz von 250 ppm der beschriebenen Produkte.

| Beispiel Nr. | Rohöl aus Borneo [°C] | Rohöl aus Indien [°C] |
|---|---|---|
| ohne Zusatz | 0 | + 27 |
| "StdT" | - 6 | + 18 |
| 1 | - 14 | + 6 |
| 2 | - 12 | + 9 |
| 3 | - 18 | + 2 |
| 4 | - 28 | - 4 |
| 5 | - 23 | - 12 |
| 6 | - 11 | - 8 |
| 7 | - 3 | + 4 |
| 8 | - 10 | + 10 |
| 9 | - 22 | - 16 |
| 10 | - 19 | - 14 |
| 12 | - 24 | - 8 |
| 13 | - 17 | - 7 |
| 14 | - 16 | - 7 |
| 15 | - 21 | + 9 |
| 16 | - 24 | - 15 |
| 18 | - 19 | + 6 |
| 19 | - 18 | + 10 |
| 20 | - 15 | + 11 |
| 21 | - 17 | - 5 |
| 22 | - 17 | + 3 |
| 23 | - 20 | - 4 |
| 24 | - 21 | - 4 |
| 25 | - 14 | 0 |
| 26 | - 13 | - 1 |
| 27 | - 23 | - 11 |
| 28 | - 23 | - 10 |
| 29 | - 20 | - 9 |

Tabelle II

| Beispiel Nr. | Rohöl aus Borneo [°C] | Rohöl aus Indien [°C] |
|---|---|---|
| 32 | - 13 | + 13 |
| 33 | - 13 | + 11 |
| 34 | - 14 | + 11 |
| 35 | - 23 | - 8 |
| 36 | - 22 | - 8 |
| 37 | - 21 | - 6 |
| 38 | - 21 | - 3 |
| 39 | - 19 | + 1 |
| 40 | - 19 | + 4 |

## Patentansprüche

1. Copolymerisate, die in statistischer Verteilung zu

2 - 50 Gew.% aus Resten der Formel I

$-CH_2-CH-$
$\quad | $
$\quad N-R^1$ (I)
$\quad | $
$\quad CO-R^2$

38 - 98 Gew.% aus Resten der Formel II

$\quad R^3$
$\quad | $
$-CH_2-C-$ (II)
$\quad | $
$\quad COOR^4$

und zu 0 - 60 Gew.% aus Resten, die sich von anderen copolymerisierbaren olefinisch ungesättigten Monomeren ableiten,

bestehen, wobei
$R^1$ Wasserstoff, Hydroxymethyl, oder Alkyl mit 1 bis 36 C-Atomen,
$R^2$ Wasserstoff, Alkyl oder Alkenyl mit 1 bis 36 C-Atomen oder Phenyl, $R^3$ Wasserstoff oder Methyl,
$R^4$ Alkyl mit 1 bis 36 C-Atomen bedeuten
mit der Maßgabe, daß mindestens einer der Reste $R^1$, $R^2$ oder $R^4$ ein Alkylrest mit 10 bis 36 C-Atomen ist.

2. Copolymerisate gemäß Anspruch 1 die in statistischer Verteilung zu

2 - 50 Gew.% aus Resten der Formel I

$-CH_2-CH-$
$\quad | $
$\quad N-R^1$ (I)
$\quad | $
$\quad CO-R^2$

38 - 98 Gew.% aus Resten der Formel II

$\quad R^3$
$\quad | $
$-CH_2-C-$ (II)
$\quad | $
$\quad COOR^4$

und zu 0 - 60 Gew.% aus Resten der Formel III

$-CH_{2-n}R^3_n\ -CH_{1-m}R^3_m-$ (III)
$\qquad\qquad | $
$\qquad\qquad X$

0105529
Ref. 3260

worin $R^7$ und $R^8$ gleich oder verschieden sind und für Alkyl mit 1 bis 4, vorzugsweise 1 oder 2 Kohlenstoffatomen stehen und p für eine Zahl von 1 bis 4 steht; sowie die den Formeln V und VI entsprechenden, beispielsweise durch Dimethylsulfat oder Methylchlorid quaternisierten Gruppen bedeutet.

3. Copolymerisate gemäß den Ansprüchen 1 und 2, dadurch gekennzeichnet, daß die zu O bis 60 Gew.% darin vorliegenden Reste der Formel III solche der Formel VII

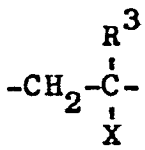

(VII)

sind.

4. Copolymerisate gemäß den Ansprüchen 1 bis 3, dadurch gekennzeichnet, daß sie in statistischer Verteilung aus 2 - 25 Gew.% Resten der Formel I, 75 - 98 Gew.% Resten der Formel II und O - 23 Gew.% Resten der Formel III bestehen.

5. Verfahren zur Herstellung von Copolymerisaten der in Anspruch 1 angegebenen Zusammensetzung, dadurch gekennzeichnet, daß man 2 bis 50 Gew.% eines gegebenenfalls N-substituerten N-Vinylcarbonsäureamids der Formel Ia

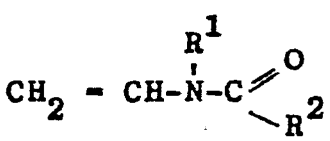

(Ia)

38 bis 98 Gew.% eines Acrylsäure-oder Methacrylsäureesters der Formel IIa

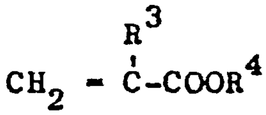

(IIa)

und gegebenenfalls
O bis 60 Gew.% eines anderen olefinisch ungesättigten Monomers, wobei die Reste $R^1$ bis $R^4$ die oben genannten Bedeutungen haben,
in an sich bekannter Weise copolymerisiert.

6. Verfahren gemäß Anspruch 5 zur Herstellung von Copolymerisaten der in Anspruch 1 angegebenen Zusammensetzung, dadurch gekennzeichnet, daß man 2 bis 50 Gew.% eines gegebenenfalls N-substituierten N-Vinylcarbonsäureamids der Formel Ia

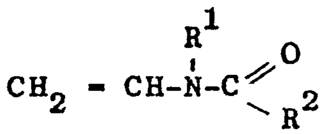 (Ia)

38 bis 98 Gew.% eines Acrylsäure-oder Methacrylsäureesters der Formel IIa

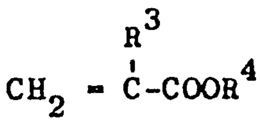 (IIa)

und gegebenenfalls 0 bis 60 Gew.% eines Derivats des Ethylens, Butadien, eines Butadien-Derivats oder eines Monomers der Formel IIIa

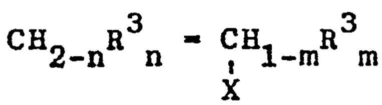 (IIIa)

wobei die Reste $R^1$ bis $R^4$ und X die oben genannte Bedeutung haben, in an sich bekannter Weise copolymerisiert.

7 . Verfahren gemäß den Ansprüchen 5 und 6 zur Herstellung von Copolymerisaten der in Anspruch 1 angegebenen Zusammensetzung, dadurch gekennzeichnet, daß man als Monomer der Formel IIIa speziell ein solches der Formel VIIa

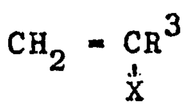 (VIIa)

wobei die Reste $R^3$ und X die oben genannten Bedeutungen haben, einsetzt.

8 . Verwendung der Copolymerisate des Anspruchs 1 als Hilfsmittel bei der Gewinnung, Verarbeitung und beim Gebrauch von Erdöl und Erdölfolgeprodukten.

9. Verwendung der Copolymerisate des Anspruchs 1 zur Verbesserung der Fließeigenschaften, der Herabsetzung der Viskosität und des Stockpunktes von Erdöl und Erdölfraktionen.

10. Verwendung der Copolymerisate des Anspruchs 1 zur Verhinderung von Paraffinausscheidungen aus flüssigen Erdölfraktionen.

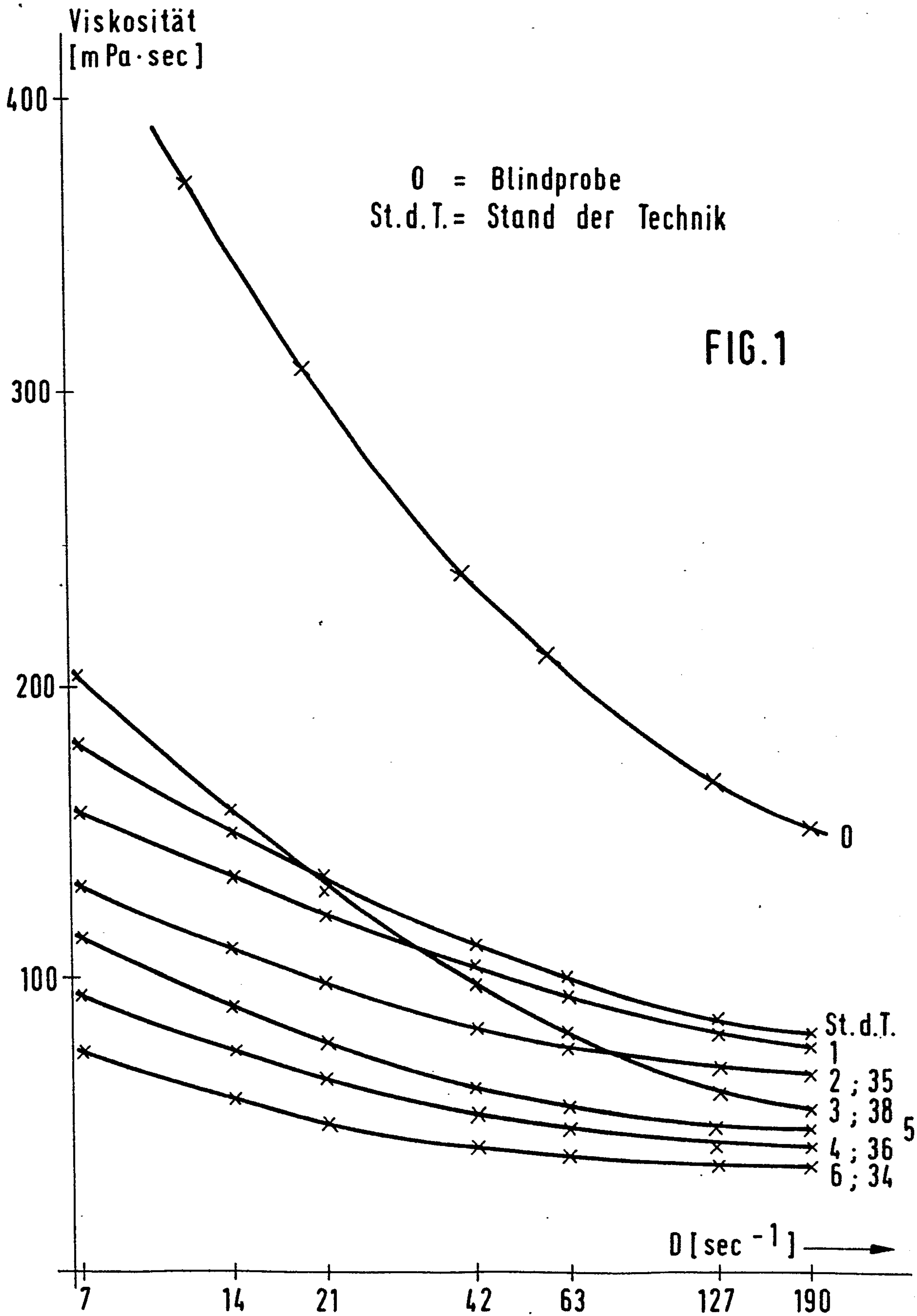


FIG.1

Fließkurven von Nordsee-Rohöl nach Zusatz von 250 ppm Polymer der angegebenen Beispiel-Nr.

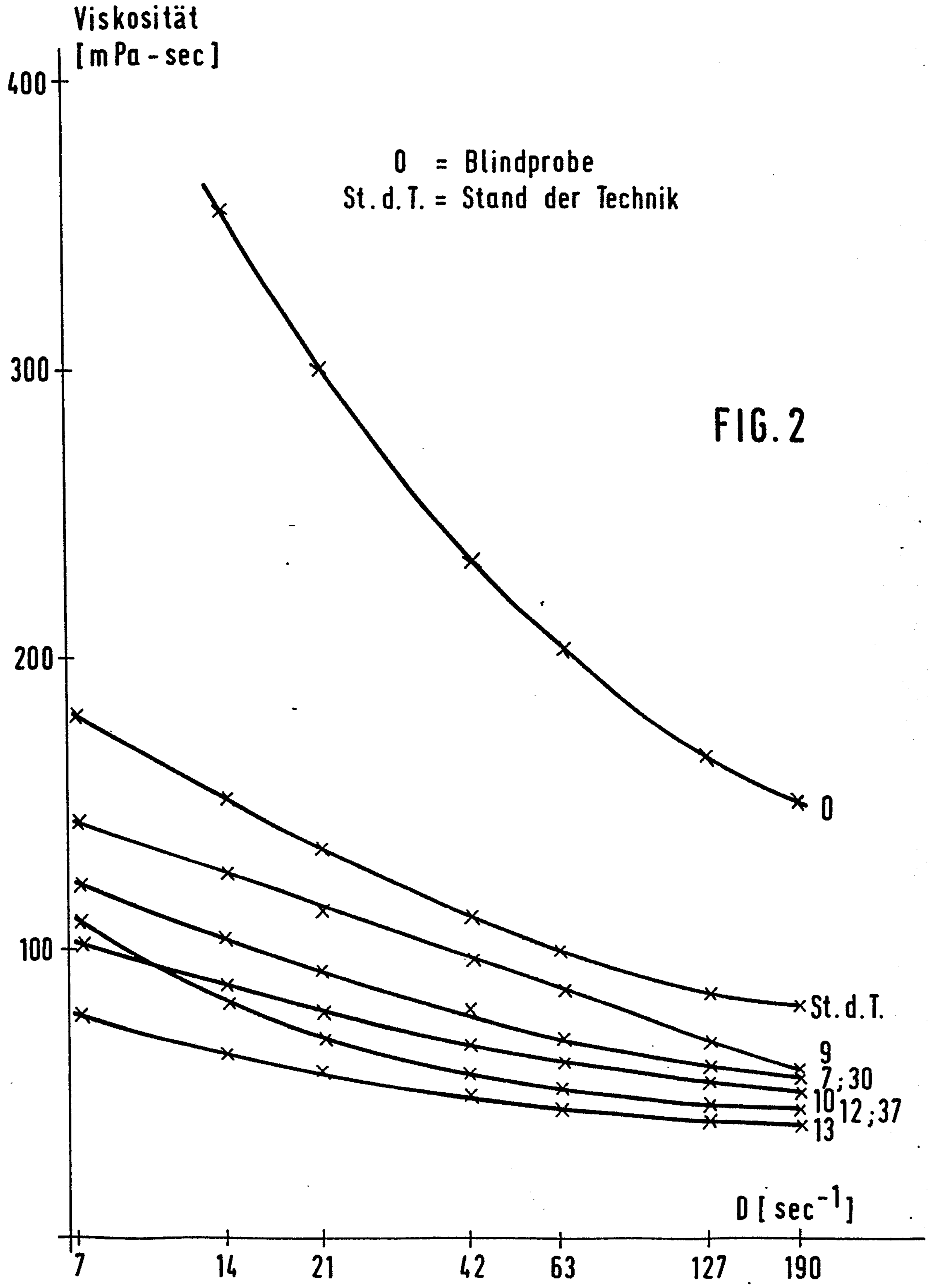


FIG. 2

Fließkurven von Nordsee-Rohöl nach Zusatz von 250 ppm Polymer der angegebenen Beispiel-Nr.

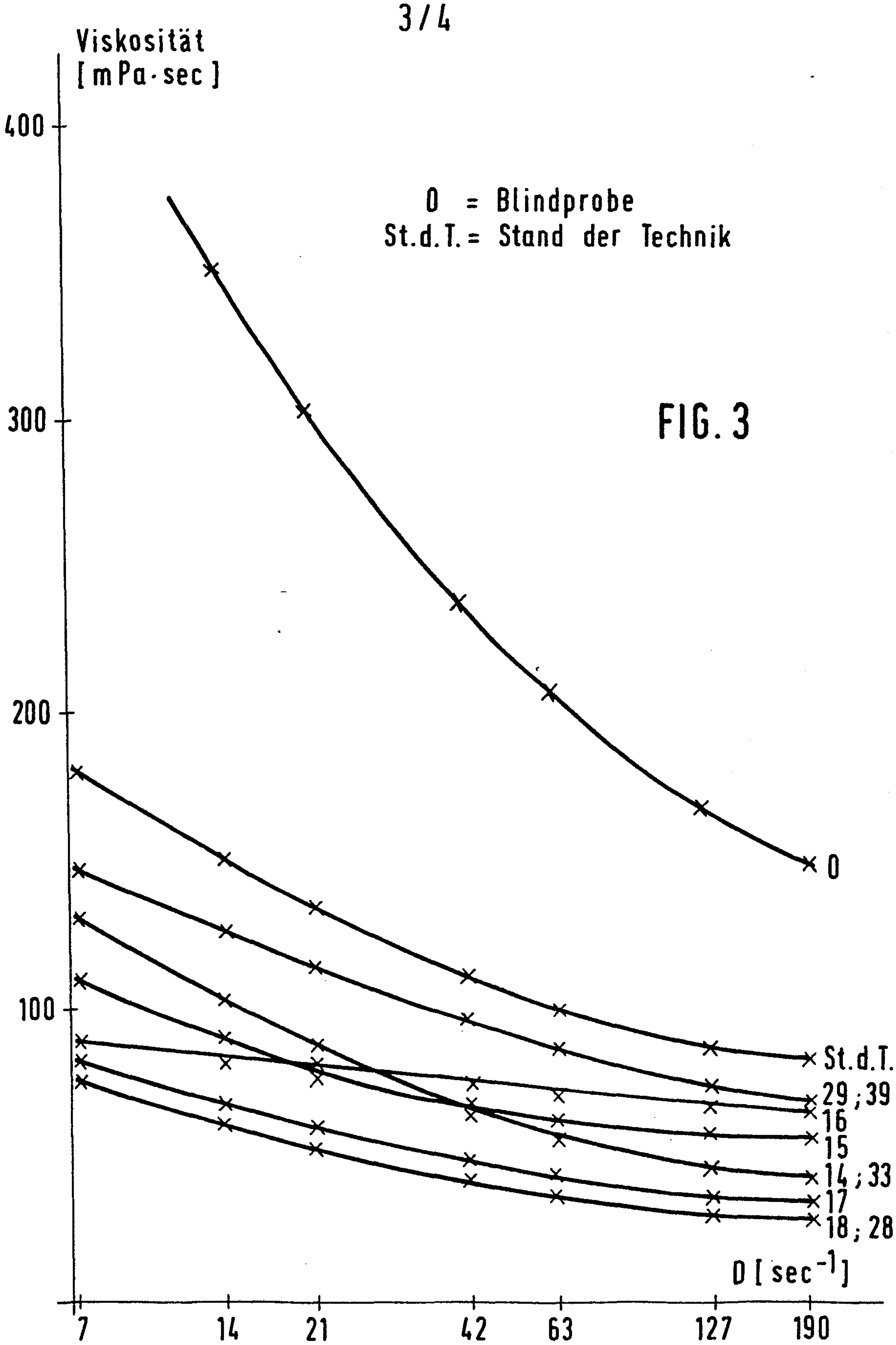


FIG. 3

Fließkurven von Nordsee-Rohöl nach Zusatz von 250 ppm Polymer der angegebenen Beispiel-Nr.

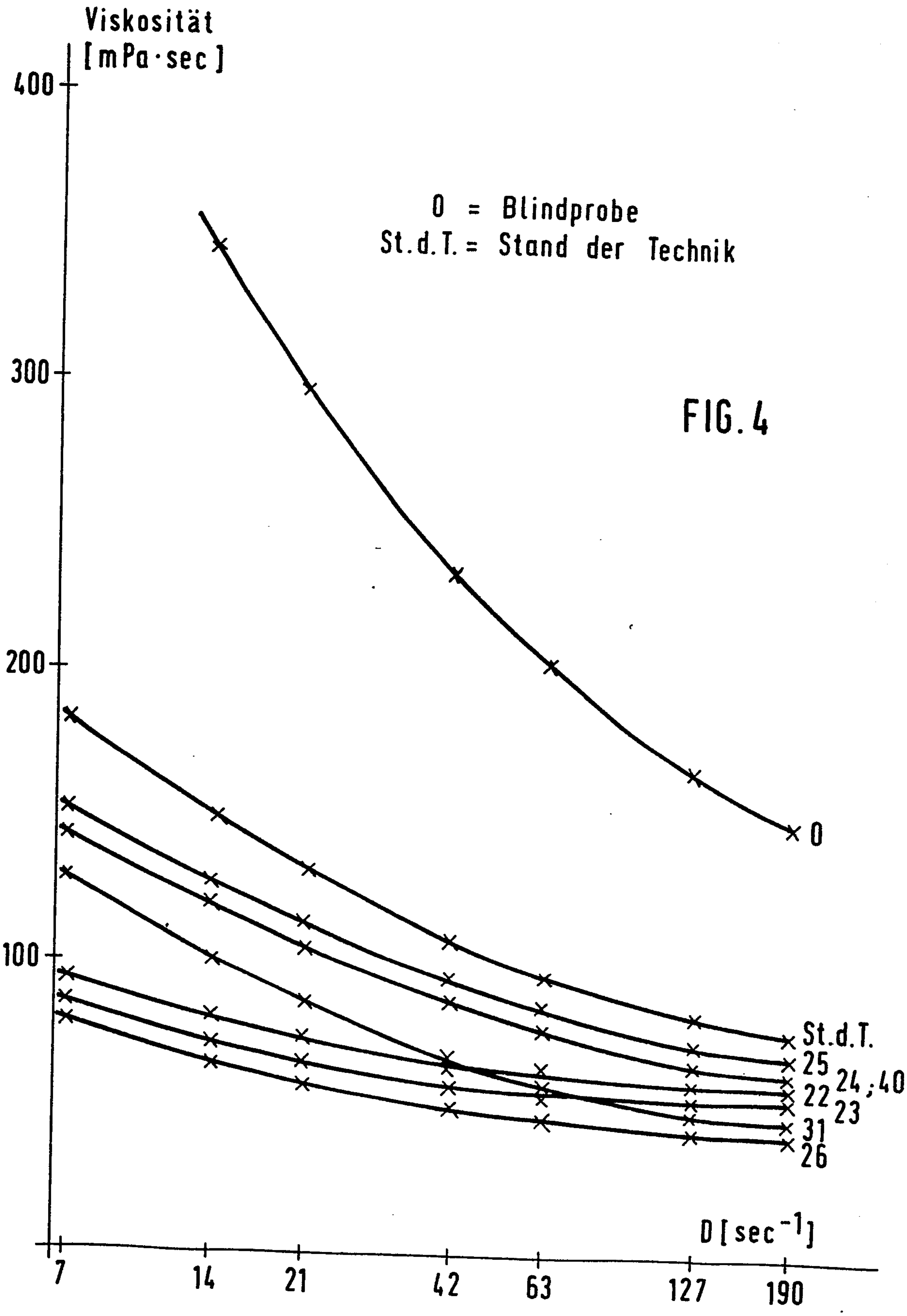


FIG. 4

Fließkurven von Nordsee-Rohöl nach Zusatz von 250 ppm Polymer der angegebenen Bespiel-Nr.

Europäisches Patentamt

# EUROPÄISCHER RECHERCHENBERICHT

0105529

Nummer der Anmeldung

EP 83 10 9997

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-B-1 246 248 (HOECHST) *Patentanspruch* --- | 1-7 | C 08 F 226/02<br>C 08 F 220/18<br>C 10 G 1/00 //<br>(C 08 F 226/02<br>C 08 F 220/18 )<br>(C 08 F 220/18<br>C 08 F 226/02 ) |
| A | EP-A-0 044 508 (CASSELLA A.G.) ----- | | |
| | | | RECHERCHIERTE SACHGEBIETE (Int. Cl. 3) |
| | | | C 08 F |

Der vorliegende Recherchenbericht wurde für alle Patentansprüche erstellt.

| Recherchenort | Abschlußdatum der Recherche | Prüfer |
|---|---|---|
| DEN HAAG | 02-12-1983 | CAUWENBERG C.L.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82